# EUROPÄISCHE PATENTSCHRIFT

(11) **EP 2 202 994 B1**
(45) Veröffentlichungstag und Bekanntmachung des Hinweises auf die Patenterteilung: **19.01.2011**
(21) Anmeldenummer: 09173413.7
(22) Anmeldetag: 19.10.2009
(51) Int. Cl.: H04N 13/00

(54) **3D-Kamera zur Raumüberwachung**
3D camera for monitoring an area
Caméra 3D pour la surveillance de pièces

(30) Priorität: 23.12.2008 DE 102008062995
(43) Veröffentlichungstag der Anmeldung: 30.06.2010
(73) Patentinhaber: SICK AG, 79183 Waldkirch (DE)
(72) Erfinder: Braune, Ingolf, 79194 Gundelfingen (DE)
(74) Vertreter: Hehl, Ulrich

(56) Entgegenhaltungen:
- WO-A1-2005/090905
- WO-A2-2006/069978
- US-A1- 2004 233 290
- US-A1- 2005 180 623

## Beschreibung

Die Erfindung betrifft eine 3D-Kamera und ein Verfahren zur Überwachung eines Raumbereichs mittels Aufnahme dreidimensionaler Entfernungsbilder nach den Oberbegriffen von Anspruch 1 beziehungsweise 8.

Kameras werden seit langem zur Überwachung eingesetzt und finden zunehmend auch Anwendung in der Sicherheitstechnik. Eine typische sicherheitstechnische Anwendung ist die Absicherung einer gefährlichen Maschine, wie etwa einer Presse oder eines Roboters, wo bei Eingriff eines Körperteils in einen Gefahrenbereich um die Maschine herum eine Absicherung erfolgt.

Dreidimensionale Kamerasysteme bieten gegenüber einfachen Kameras und auch gegenüber herkömmlichen sicherheitstechnischen Sensoren wie Scannern und Lichtgittern den Vorteil, flächendeckend Tiefeninformationen aus einer zweidimensional aufgenommenen Beobachtungsszenerie zu ermitteln. Mit Hilfe der Tiefeninformationen können in sicherheitstechnischen Anwendungen Schutzbereiche variabler und genauer festgelegt und mehr und genauere Klassen von erlaubten Objektbewegungen unterschieden werden. Beispielsweise ist es möglich, Bewegungen des Roboters selbst oder Vorbeibewegungen eines Körperteils an der gefährlichen Maschine in einer unterschiedlichen Tiefenebene als ungefährlich zu erkennen. Das wäre mit einem zweidimensionalen System von einem unzulässigen Eingriff nicht unterscheidbar.

Ein bekanntes Verfahren zur Aufnahme dreidimensionaler Entfernungsbilder, in denen also zusätzlich zu einem flachen Bild eine Entfernungs- oder Tiefeninformation gewonnen wird, ist die Stereoskopie. Dabei werden Bilder der Szenerie aus leicht unterschiedlichen Perspektiven gewonnen. In den überlappenden Bildbereichen werden gleiche Strukturen identifiziert und aus der Disparität und den optischen Parametern des Kamerasystems mittels Triangulation Entfernungen und somit ein dreidimensionales Bild beziehungsweise eine Tiefenkarte berechnet. Ein weiteres Verfahren besteht darin, für jeden Pixel die Lichtlaufzeit bis zu den Objekten in der überwachten Szenerie zu ermitteln und daraus die Tiefeninformation zu gewinnen. Dies kann durch Aussenden von intensitätsmoduliertem Licht und Phasenmessung, auf der beispielsweise die Photonmischdetektion beruht, oder durch direkte Laufzeitmessung eines Lichtpulses erfolgen.

Für sicherheitstechnische Anwendungen ist zumindest bei höheren Ansprüchen an die Schutzklasse erforderlich, dass die dreidimensionalen Bilddaten in Form einer dichten Tiefenkarte vorliegen, also einen zuverlässigen Abstandswert für jeden relevanten Bildbereich und bevorzugt nahezu jeden Bildpunkt enthalten. Lichtlaufzeitverfahren sind notwendig aktiv und daher von den Kontrasten der Szenerie weitgehend unabhängig. Stereoskopieverfahren aber können bei einer kontrastschwachen zu überwachenden Szenerie mit Bereichen ohne erkennbare Struktur keine zuverlässigen Abstandsdaten ermitteln, weil keine eindeutigen Korrespondenzen in den beiden aufgenommenen Einzelbildern aufgefunden werden. Dies ist vor allem ein Problem für passive Stereomesssysteme, die ihre Abstandsmessung allein aufgrund der natürlicherweise in den Bildern vorhandenen Merkmale durchführen und demnach keinen Einfluss auf die Qualität und Dichte dieser Merkmale haben.

Aktive Stereosysteme verwenden zusätzlich zu dem Empfangssystem, also im Wesentlichen zwei zueinander kalibrierten Kameras, eine Beleuchtungseinheit, deren Funktion ist, die beobachtete Szenerie mit strukturiertem Licht zu beleuchten und so durch die zahlreichen Hell-Dunkel-Übergänge in den Bildern Merkmale zu erzeugen, anhand derer der Stereoalgorithmus zuverlässige und dichte Abstandsdaten aus der Szenerie extrahieren kann. Solche Muster können auch selbstunähnlich sein, also für die vorliegenden Überwachungen in erster Linie keine bezüglich Verschiebungen zueinander symmetrischen Bereiche aufweisen.

In der US 2007-0263903 A1 erzeugt ein stereoskopisches Kamerasystem mittels einer Beleuchtungseinheit ein strukturiertes Beleuchtungsmuster, welches dann verwendet wird, um Entfernungen zu berechnen. Dabei entsteht das Muster, indem ein diffraktives optisches Element mit einem Laser oder einer LED beleuchtet wird. Andere Beleuchtungseinheiten verwenden Projektionstechniken ähnlich einem Diaprojektor als Mustergeneratoren.

Auch eine prinzipiell geeignete dreidimensionale Kamera arbeitet nur dann zuverlässig, wenn sie richtig kalibriert ist. Die DE 10 2005 063 217 A1 beschreibt ein Verfahren zum Konfigurieren einer Überwachungseinrichtung, die ein dreidimensionales Abbild des Raumbereichs erzeugt. Teil der Konfiguration ist, dass Referenzmarken in dem Überwachungsbereich angeordnet werden, die dann später am Konfigurationsrechner ausgewählt werden können. Im Betrieb werden die Positionen der ausgewählten Referenzmarken überwacht, um die Justierung und fehlerfreie Funktion der Kamera zu überprüfen, ob sich also Aufnahmebereiche der Kameras verschoben haben oder ob Optiken verschmutzt sind.

Dieses Vorgehen ist umständlich und wenig flexibel. Es müssen zunächst die Referenzmarken angebracht werden, ehe die Positionen für eine Kalibrierungsüberwachung überhaupt konfigurierbar sind. Stellt sich dann am Konfigurationsrechner heraus, dass die Positionen nicht geeignet sind, so müssen die Referenzmarken entfernt und an anderer Stelle angebracht werden. Dabei gibt es auch keine direkte Rückmeldung, ob die neue Position besser ist, das lässt sich erst wieder am Konfigurationsrechner prüfen. Außerdem verbleiben die Referenzmarken stets im Überwachungsbereich, wo sie beschädigt oder entfernt werden können. Dabei ist das beschriebene passive Stereosystem zwingend auf Referenzmarken oder Konturen in der Szenerie angewiesen, um überhaupt die Positionen gewinnen zu können.

Aus der US 2004/0233290 A1 ist eine Diagnosevorrichtung für eine Stereoskopiekamera eines Roboters bekannt. Dabei stellt sich der Roboter in einer vorgegebenen Weise auf eine texturierte Diagnosematte und führt dort vorgegebene Bewegungen aus. Dabei muss die Stereoskopiekamera die Diagnosematte als flach erkennen, oder sie wird als nicht hinreichend kalibriert angesehen.

Es ist daher Aufgabe der Erfindung, eine einfache und zuverlässige Kalibrierungsüberprüfung für eine 3D-Kamera anzugeben.

Diese Aufgabe wird durch eine 3D-Kamera nach Anspruch 1 und ein Verfahren zur Überwachung eines Raumbereichs nach Anspruch 8 gelöst. Die erfindungsgemäße Lösung geht von dem Prinzip aus, einer Kalibrierungsüberprüfung zugrundegelegte Positionsdaten an beliebiger Stelle in dem dreidimensionalen Entfernungsbild wählen zu können. Dabei wird die reale Szenerie nicht verändert.

Mit der Erfindung werden also gleichsam virtuelle Referenzmarken gesetzt. Damit verbindet sich der Vorteil, dass keine realen Referenzmarken beschädigt werden oder verloren gehen und eine völlige Flexibilität in der Wahl der Teilbereiche entsteht, die weder durch die Szenerie noch die Notwendigkeit künstlicher Marken eingeschränkt ist.

Unter Kontrasteigenschaften der Objekte sind deren eigene Eigenschaften zu verstehen, also durch Farbe, Kanten oder sonstige Struktur entstehende Kontraste. Von diesem natürlichen Kontrast zu unterscheiden ist ein künstlicher, aufgeprägter Kontrast, wie er beispielsweise durch Lichtquellen der 3D-Kamera entsteht. Nach dem herkömmlichen Verfahren wird in diesem Sinne ein natürlicher Kontrast ausgewertet, den die Referenzmarke in die Szenerie trägt. Nur solche speziellen Merkmale können herkömmlich für die Kalibrierungsprüfung genutzt werden. Dabei ist natürlich umgekehrt nicht verboten, wenn sich erfindungsgemäß Teilbereiche mit Struktur des Überwachungsbereichs überlappen. Es entsteht aber die zusätzliche Freiheit, dass mindestens einer der Teilbereiche auch in strukturlosen, ebenen Flächen oder sonstigen Bildbereichen gewählt wird, wo keine Kontrasteigenschaften der Objekte ausgewertet werden können, die also keinen natürlichen Kontrast aufweisen.

Ein Teilbereich ist üblicherweise ein kleines Fenster mit einem oder mehreren Pixeln, kann aber auch beispielsweise als Linie durch das Entfernungsbild von dieser Form abweichen. Jedenfalls sollte die Summe der Teilbereiche nur einen kleinen Teil, also weniger als beispielsweise 80%, 90%, 95% oder 99% des Entfernungsbilds abdecken, um eine schnelle und einfache Kalibrierungsüberprüfung zu ermöglichen.

Die 3D-Kamera ist bevorzugt eine Kamera nach dem Stereoskopieprinzip, deren Bildaufnahmeeinrichtung mindestens zwei pixelaufgelöste Bildsensoren sowie eine Stereoskopieauswertungseinheit aufweist, welche dafür ausgebildet ist, Bilddaten der Bildsensoren zu dem dreidimensionalen Entfernungsbild zu verrechnen, und wobei eine Beleuchtungseinheit vorgesehen ist, welche dafür ausgebildet ist, dem Raumbereich ein kontrastiertes Beleuchtungsmuster aufzuprägen. Für das Stereoskopieverfahren sind eine Reihe leistungsfähiger Auswertungen bekannt. Mit einer aktiven Beleuchtung sind im Gegensatz zu passiven Stereosystemen auch dichte Tiefenkarten möglich, namentlich bei Verwendung von lichtstarken, lokal oder global selbstunähnlichen Mustern. Die aktive Beleuchtung schafft über den gesamten überwachten Raumbereich hinweg künstliche Kontraste und bildet so ein beliebig großes Reservoir an virtuellen Referenzmarken an. Die Kalibrierungsprüfung betrifft dabei dann nicht nur die Kamera selbst, sondern auch die Beleuchtung. Eine kleinere relative Verschiebung zwischen dem Beleuchtungsmuster und der Szenerie ist unschädlich, da sie die beiden aufgenommenen Bilder zugleich betrifft. Fehlt dagegen das Beleuchtungsmuster in einem Teilbereich, sei es wegen einer größeren relativen Verschiebung, eines Leistungsabfalls oder einer sonst denkbaren beeinträchtigenden Störung, so wird auch dies von der Kalibrierungsüberprüfung erkannt.

Alternativ kann die 3D-Kamera eine Laufzeitkamera sein, deren Bildaufnahmeeinrichtung einen Bildsensor mit einer Vielzahl von Pixeln aufweist, die jeweils dafür ausgebildet sind, einen Lichtpuls oder moduliertes Licht auszusenden und die Entfernung aus der Pulslaufzeit oder der Phasenverschiebung des reflektierten und wieder empfangenen Lichts zu bestimmen. Hier ist es das für die Laufzeitmessung verwendete Sendelicht, das die Unabhängigkeit von natürlichen Kontrasten schafft.

Die Steuerung ist vorteilhafterweise dafür ausgebildet ist, Teilbereiche automatisch auszuwählen. Dazu ist ein einfaches Vorgehen denkbar, bei dem die Teilbereiche a priori festgelegt sind, es kann aber auch das Entfernungsbild ausgewertet werden, um geeignete Flächenbereiche aufzufinden, beispielsweise nicht gerade Flächenbereiche, die in einem gleichen Abstand zu den Kameras senkrecht stehen und die sich daher für eine Überprüfung einer Verschiebung nicht eignen. Andere Einflüsse auf die automatische Auswahl sind bekannte Dynamiken der Szenerie, beispielsweise ist ein Teilbereich weniger geeignet, wenn bekannt ist, dass er im Betrieb den Großteil der Zeit von einem Roboter verdeckt sein wird. Die automatische Auswahl kann durch eine Benutzereingabe unterstützt, geprüft oder ersetzt werden.

Die Steuerung ist bevorzugt dafür ausgebildet, mindestens drei Teilbereiche auszuwählen. Dies ist die notwendige und hinreichende Anzahl von Teilbereichen, um jegliche Verdrehung, Verschiebung oder Verkippung sicher zu erkennen. Das System lässt sich natürlich auch überbestimmen, indem mehr als drei Teilbereiche gewählt werden. Bei Unterstützung oder Ersetzung der automatischen Auswahl durch eine Benutzereingabe fordert die Steuerung gemäß dieser Ausführungsform die Eingabe mindestens dreier Teilbereiche.

Die Steuerung ist bevorzugt dafür ausgebildet, für die Überprüfung der Kalibrierung mehrere Referenzpositionsdaten aus einem Teilbereich einzulernen und zu vergleichen. Mit mehreren Referenzpositionen, insbesondere Entfernungswerten je Teilbereich lässt sich auf eine Drehung oder Verkippung auch schon aus einem Bereich schließen. Dazu können insbesondere Tiefenverläufe in zu der Tieferichtnung Z senkrechten X/Y-Richtung herangezogen werden.

Die 3D-Kamera ist als Sicherheitskamera ausgebildet und weist einen Sicherheitsausgang auf, über den ein Abschaltsignal an eine Gefahrenquelle in dem Raumbereich ausgebbar ist, wenn die Steuerung bei der Überprüfung der Kalibrierung mehr als eine erlaubte Abweichung zwischen Entfernungsdaten und Referenzpositionsdaten oder durch Auswertung des Entfernungsbildes einen unzulässigen Eingriff in dem Raumbereich detektiert. Das Abschaltsignal beseitigt die Gefahr mittelbar oder unmittelbar.

Die Steuerung ist bevorzugt dafür ausgebildet, bei der Überprüfung der Kalibrierung temporäre Unterschiede zwischen Entfernungsdaten und Referenzpositionsdaten in den Teilbereichen zu tolerieren und erst dann ein Abschaltsignal zu erzeugen, wenn weniger als eine vorgegebene Anzahl von Teilbereichen länger als eine Mindestzeit nicht auswertbar sind. Damit sind auch Überwachungen in dynamischen Szenerien möglich. Die vorübergehende Verdeckung einzelner Teilbereiche ist unschädlich, solange noch genug auswertbare Information vorliegt, um die Kalibrierung sicherzustellen. Ein entsprechend tolerantes Verfahren erhöht die Verfügbarkeit.

In einer vorteilhaften Weiterbildung der Erfindung ist die Steuerung dafür ausgebildet, der Überprüfung der Kalibrierung zu verschiedenen Zeiten unterschiedliche Teilbereiche zugrunde zu legen. Dies ist dann hilfreich, wenn in dynamischen Szenerien vorab oder durch Bildauswertungen bekannt ist, dass ein Teil des Entfernungsbildes verdeckt sein wird, etwa in bestimmten Arbeitsschritten eines Roboters, beim Durchfahren einer Palette oder dergleichen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische räumliche Gesamtdarstellung einer 3D- Sicherheitskamera und des überwachten Raumbereichs;
- Fig. 2: eine schematische beispielhafte aufgenommene Szenerie zur Erläuterung der Teilbereiche für die erfindungsgemäße Kalibrierungsüberprüfung; und
- Fig. 3: ein Ablaufdiagramm einer Ausführungsform der erfindungsgemäßen Kalib- rierungsüberprüfung.

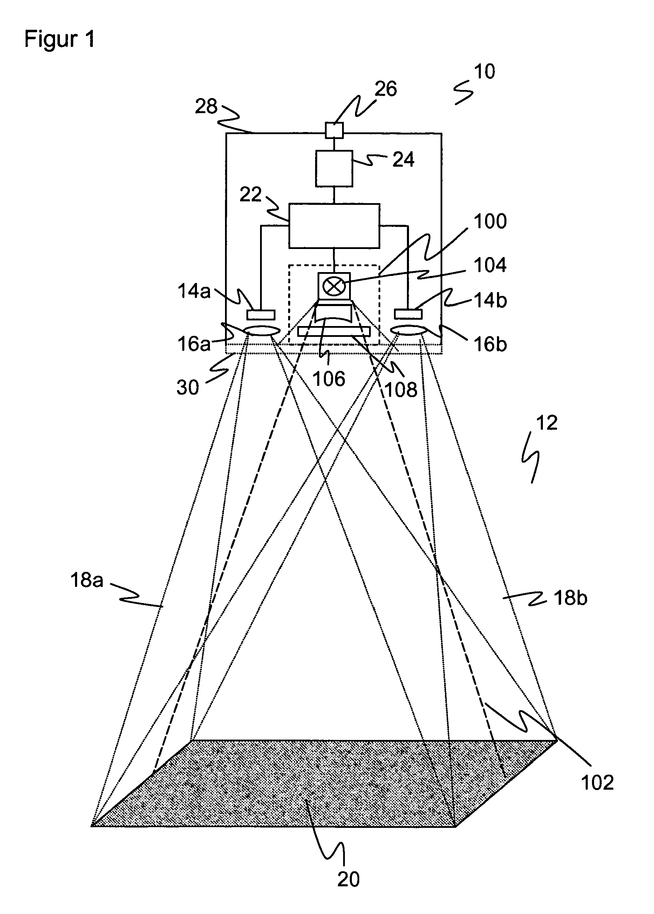

Figur 1 zeigt in einer schematischen dreidimensionalen Darstellung den allgemeinen Aufbau einer erfindungsgemäßen 3D-Sicherheitskamera 10 nach dem Stereoskopieprinzip, die zur sicherheitstechnischen Überwachung eines Raumbereichs 12 eingesetzt ist. Zwei Kameramodule sind in einem bekannten festen Abstand zueinander montiert und nehmen jeweils Bilder des Raumbereichs 12 auf. In jeder Kamera ist ein Bildsensor 14a, 14b vorgesehen, üblicherweise ein matrixförmiger Aufnahmechip, der ein rechteckiges Pixelbild aufnimmt, beispielsweise ein CCD- oder ein CMOS-Sensor. Den Bildsensoren 14a, 14b ist ein Objektiv mit einer abbildenden Optik zugeordnet, welche als Linsen 16a, 16b dargestellt sind und in der Praxis als jede bekannte Abbildungsoptik realisiert sein können. Der Sichtwinkel dieser Optiken ist in Figur 1 durch gestrichelte Linien dargestellt, die jeweils eine Sichtpyramide 18a, 18b bilden.

In der Mitte zwischen den beiden Bildsensoren 14a, 14b ist eine Beleuchtungseinheit 100 dargestellt, wobei diese räumliche Anordnung nur als Beispiel zu verstehen ist und die Beleuchtungseinheit ebenso asymmetrisch oder sogar außerhalb der Sicherheitskamera 3D angeordnet sein kann. Die Beleuchtungseinheit 100 erzeugt in einem Beleuchtungsbereich 102 ein strukturiertes Beleuchtungsmuster 20 in dem Raumbereich 12. Dazu wird der Strahlengang einer Laserlichtquelle 104 zunächst durch eine Optik 106 aufgeweitet, beispielsweise durch eine Streulinse. Das divergente, kohärente Licht fällt auf ein mustererzeugendes Phasenelement 108. Dabei handelt es sich um ein durchsichtiges Element, beispielsweise eine dünne Glasplatte, deren eine oder beide Flächen eine leicht unebene Topologie aufweist. Durch die lokalen Dickenunterschiede des Glases kommt es zu lokalen Phasenverschiebungen der durchtretenden Lichtwellen und deshalb in größerer Entfernung von der Phasenplatte 108 zur Ausbildung des Interferenzmusters, welches das strukturierte Beleuchtungsmuster 20 bildet. Das Interferenzmuster ist bei guter räumlicher Kohärenz der Lichtquelle 104 und geeigneter Oberflächenstruktur der Phasenplatte 108 stark durchmoduliert, so dass ein flächendeckendes Beleuchtungsmuster 20 von gut sichtbaren und selbstunähnlichen Hell-Dunkel-Übergängen entsteht. Alternativ zur Verwendung des entstehenden Beleuchtungsmusters im Fernfeld kann auch das Interferenzmuster im Nahfeld kurz hinter dem Phasenelement 108 durch eine weitere, nicht dargestellte Abbildungsoptik in dem Raumbereich abgebildet werden.

Statt der dargestellten Beleuchtungseinheit 100 ist wie einleitend möglich, ein Muster über ein DOE oder durch eine Maske beziehungsweise ein Dia zu projizieren und dafür auch andere Lichtquellen zu verwenden, etwa LEDs oder Halogenlampen. Bevorzugt sind Beleuchtungen, welche statt Lichtenergie teilweise zu absorbieren die verfügbare Lichtenergie musterförmig umverteilen, um einen hohen Wirkungsgrad zu erzielen und zugleich thermische Probleme zu vermeiden.

Mit den beiden Bildsensoren 14a, 14b und der Beleuchtungseinheit 100 ist eine Steuerung 22 verbunden. Mittels der Steuerung 22 wird das strukturierte Beleuchtungsmuster 20 erzeugt und bei Bedarf in seiner Struktur oder Intensität variiert, und die Steuerung 22 empfängt Bilddaten der Bildsensoren 14a, 14b. Aus diesen Bilddaten berechnet die Steuerung 22 mit Hilfe einer stereoskopischen Disparitätsschätzung dreidimensionale Bilddaten (Abstandsbild, Entfernungsbild, Tiefenkarte) des Raumbereichs 12. Das strukturierte Beleuchtungsmuster 20 sorgt dabei für einen guten Kontrast und eine eindeutig zuordenbare Struktur jedes Bildelements in dem beleuchteten Raumbereich 12. Es ist selbstunähnlich, wobei der wichtigste Aspekt der Selbstunähnlichkeit das zumindest lokale, besser globale Fehlen von Translationssymmetrien ist, so dass keine scheinbaren Verschiebungen von Bildelementen in den jeweils aus unterschiedlicher Perspektive aufgenommenen Bildern aufgrund gleicher Beleuchtungsmusterelemente erkannt werden, welche Fehler in der Disparitätsschätzung verursachen würden.

Mit zwei Bildsensoren 14a, 14b tritt dabei ein bekanntes Problem auf, dass Strukturen längs der Epipolarlinie nicht für die Disparitätsschätzung herangezogen werden können, weil hier kein Triangulationswinkel auftritt oder, anders ausgedrückt, das System nicht lokal unterscheiden kann, ob die Struktur in den beiden Bildern aufgrund der Perspektive gegeneinander verschoben aufgenommen oder ob lediglich ein ununterscheidbarer anderer Teil derselben, parallel zur Basis des Stereosystems ausgerichteten Struktur verglichen wird. Um dies zu lösen, können in anderen Ausführungsformen ein oder mehrere weitere Kameramodule eingesetzt werden, welche gegenüber der Verbindungsgeraden der ursprünglichen beiden Kameramodule versetzt angeordnet sind.

Im von dem Sicherheitssensor 10 überwachten Raumbereich 12 können sich bekannte und unerwartete Objekte befinden. Dabei kann es sich beispielsweise um einen Roboterarm, eine Maschine, eine Bedienperson und anderes handeln. Der Raumbereich 12 bietet Zugang zu einer Gefahrenquelle, sei es weil es ein Zugangsbereich ist oder weil sich eine gefährliche Maschine in dem Raumbereich 12 selbst befindet. Um diese Gefahrenquelle abzusichern, können ein oder mehrere virtuelle Schutz- und Warnfelder konfiguriert werden. Aufgrund der dreidimensionalen Auswertung ist es möglich, diese Felder ebenfalls dreidimensional zu definieren, so dass eine große Flexibilität entsteht. Die Steuerung 22 wertet die dreidimensionalen Bilddaten auf unzulässige Eingriffe aus. Die Auswertungsregeln können beispielsweise vorschreiben, dass in Schutzfeldern überhaupt kein Objekt vorhanden sein darf. Flexiblere Auswertungsregeln sehen vor, zwischen erlaubten und nicht erlaubten Objekten zu differenzieren, etwa anhand von Bewegungsbahnen, Mustern oder Konturen, Geschwindigkeiten oder allgemeinen Arbeitsabläufen, die sowohl vorab als erlaubt eingelernt als auch anhand von Bewertungen, Heuristiken oder Klassifikationen noch während des Betriebs eingeschätzt werden.

Erkennt die Steuerung 22 einen unzulässigen Eingriff in ein Schutzfeld, so wird über eine Warn- oder Abschalteinrichtung 24, die wiederum in die Steuerung 22 integriert sein kann, eine Warnung ausgegeben oder die Gefahrenquelle abgesichert, beispielsweise ein Roboterarm oder eine sonstige Maschine gestoppt. Sicherheitsrelevante Signale, also vor allem das Abschaltsignal, werden über einen Sicherheitsausgang 26 ausgegeben (OSSD, Output Signal Switching Device). Dabei hängt es von der Anwendung ab, ob eine Warnung genügt, beziehungsweise es ist eine zweistufige Absicherung vorgesehen, bei der zunächst gewarnt und erst bei fortgesetztem Objekteingriff oder noch tieferem Eindringen abgeschaltet wird. Statt einer Abschaltung kann die angemessene Reaktion auch das sofortige Verbringen in eine ungefährliche Parkposition sein.

Die Sicherheitskamera 10 wird von einem Gehäuse 28 umgeben und geschützt. Durch eine Frontscheibe 30 kann Licht in und aus dem Raumbereich 12 hindurchtreten. Die Frontscheibe 30 hat Filtereigenschaften, welche auf die Sendefrequenz der Beleuchtungseinheit 100 abgestimmt ist. Selbst mit lichtstarken Beleuchtungseinheiten 100 kann nämlich bei ungünstigen Bedingungen, wie sehr hellen Umgebungen, großen Überwachungsvolumina oder großen Abständen von 5 Metern und mehr, das Nutzsignal im Rauschen des Gesamtspektrums nicht hinreichend detektiert werden. Mit einer Beleuchtungseinheit 100, die nur Licht in einem oder mehreren schmalen sichtbaren, ultravioletten oder infraroten Bändern aussendet, und einem darauf abgestimmten Filter 30 kann das Signal/Rauschverhältnis ganz erheblich verbessert werden, weil Umgebungslicht außerhalb dieser Bänder keine Rolle mehr spielt. Der optische Filter 30 kann auch anders realisiert sein, etwa in den Objektiven der Kameramodule.

Um für sicherheitstechnische Anwendungen geeignet zu sein, ist die Kamera 10 fehlersicher ausgelegt. Dies bedeutet unter anderem, dass die Kamera 10 sich selber in Zyklen unterhalb der geforderten Ansprechzeit testen kann, insbesondere auch Defekte der Beleuchtungseinheit 100 erkennt und somit sicherstellt, dass das Beleuchtungsmuster 20 in einer erwarteten Mindestintensität verfügbar ist, und dass der Sicherheitsausgang 26 sowie die Warn- oder Abschalteinrichtung 24 sicher, beispielsweise zweikanalig ausgelegt sind. Ebenso ist auch die Steuerung 22 selbstsicher, wertet also zweikanalig aus oder verwendet Algorithmen, die sich selbst prüfen können. Derartige Vorschriften sind für allgemeine berührungslos wirkende Schutzeinrichtungen in der EN 61496-1 bzw. der IEC 61496 normiert. Eine entsprechende Norm für Sicherheitskameras befindet sich in der Vorbereitung.

Ein Kriterium für den Selbsttest der Kamera 10 auf Einsatzbereitschaft ist eine Kalibrierungsüberwachung. Schon eine leichte unentdeckte Dekalibrierung des optischen Aufbaus der Kamera 10 könnte zu fehlerhaften Entfernungsmesswerten und damit zu Sicherheitsproblemen führen. Mit Kalibrierung sind unter anderem Befestigungen, Systemaufbau sowie Justierung und Zustand der optischen Teile zusammengefasst. Überwachbare Änderungen sind also Verdrehungen, Verkippungen, Abstandsänderungen zum Raumbereich oder Basisabstandsänderungen der Kameras eines Stereoskopiesystems sowie Verunreinigungen oder Defekte in den Objektiven oder Bildsensoren.

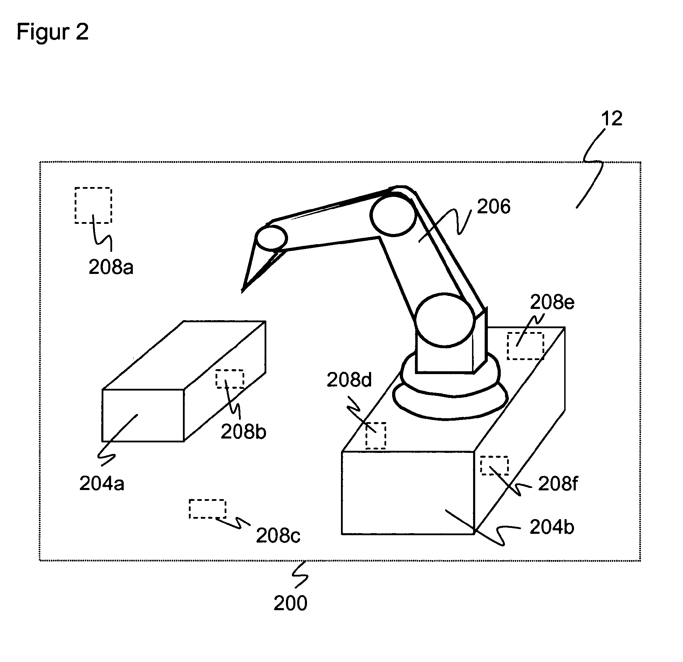

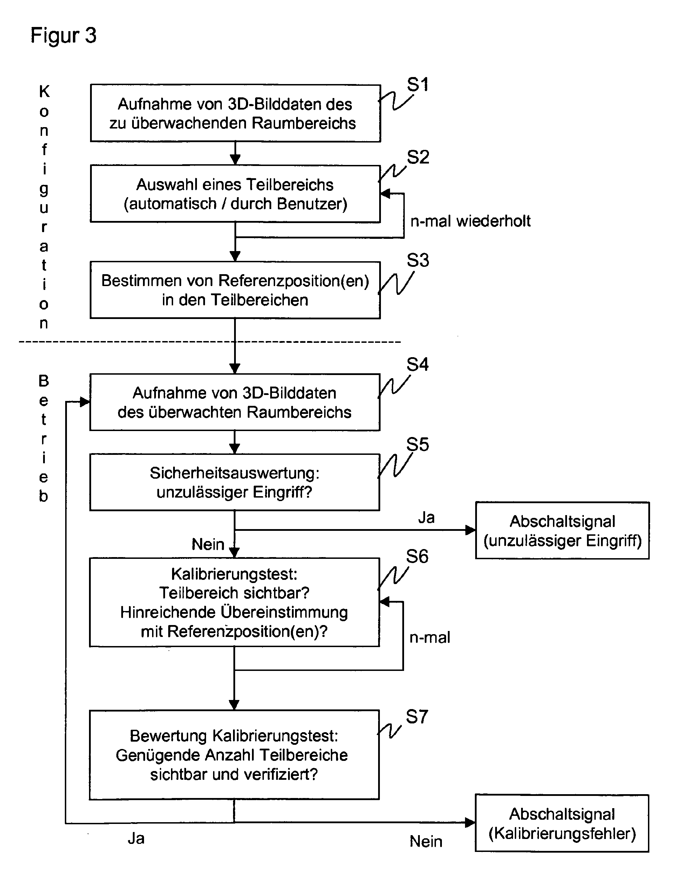

Eine erfindungsgemäße Kalibrierungsüberwachung wird nun unter Bezugnahme auf Figur 2 mit einer beispielhaften schematisch dargestellten Aufnahme der Szenerie in dem Raumbereich und auf ein in Figur 3 dargestelltes Ablaufschema erläutert. Dazu wird in einer Konfigurationsphase in einem ersten Schritt S1 200 ein Bild des Raumbereichs 12 aufgenommen und in einem Konfigurationsgerät, beispielsweise einem Computer, Notebook, PDA oder Mobiltelefon dargestellt. In dem Raumbereich sind als Beispiel einer Szenerie zwei Arbeitstische 204a, 204b schematisch gezeigt, wobei einer davon einen Roboterarm 206 trägt. Die bevorzugte Perspektive in der Praxis ist allerdings abweichend von der Darstellung der Figur 2 eine Ansicht von oben.

In einem Schritt S2 wird durch Benutzereingaben oder automatisch durch die Steuerung 22 ein Teilbereich 208a selektiert. Dieser Selektionsschritt S2 wird so oft insgesamt n-mal wiederholt, wie Teilbereiche 208a-f vorgegeben werden sollen. Für jegliche Abweichungen in der gewünschten Orientierung und Befestigung der Kamera 10 genügen drei Teilbereiche 208, aber auch mit weniger Teilbereichen 208 sind Kalibrierungsüberprüfungen möglich. Die Teilbereiche werden vorteilhaft so gewählt, dass sie im späteren Betrieb eine hohe Sichtbarkeitswahrscheinlichkeit haben. Prinzipiell kann auf den ersten Schritt S1 auch verzichtet werden, die Konfiguration erfolgt dann ohne Rücksicht auf die tatsächliche Szenerie und ist damit beispielsweise in Bezug auf Sichtbarkeitswahrscheinlichkeit nicht unbedingt optimal angepasst, die anschließende Kalibrierungsüberwachung ist aber dennoch möglich.

In einem Schritt S3 berechnet die Steuerung 2 oder der Konfigurationsrechner für jeden selektierten Teilbereich 208a-f mindestens eine Referenzposition. Im einfachsten Fall besteht ein Teilbereich 208 aus lediglich einem Pixel und dem so eingelernten zugehörigen Abstandswert als Referenzposition. In etwas größeren Teilbereichen 208b,f an zu der Kamera 10 schräg liegenden Flächen können aber auch mehrere Referenzpositionen errechnet werden, um einen Tiefenverlauf in x- und/oder y- Richtung aufzuzeichnen. Später im Betrieb bei der Kalibrierungsüberprüfung kann dann nur der eine Abstandswert, aber auch darüber hinaus ein genauere Aussagen zulassender Tiefenverlauf als zusätzliches Prüfkriterium für die Kalibrierung und Ausrichtung der Kamera ausgewertet werden.

Mit dem Einlernen von Teilbereichen 208 und zugehörigen Referenzpositionen ist die Konfiguration für die Kalibrierungsüberprüfung abgeschlossen. Wenn die Steuerung 22 die Teilbereiche 208 wählt, ist diese Konfiguration vollständig automatisiert.

Im Betrieb werden je Überwachungszyklus zunächst in einem Schritt S4 dreidimensionale Bilddaten des Raumbereichs 12 erzeugt. In einer Sicherheitsauswertung der Steuerung 22 wird dann ausgewertet, ob ein unzulässiger Eingriff in einen Schutzbereich vorliegt. Ist das der Fall, so wird über den Sicherheitsausgang 26 ein Abschaltsignal ausgegeben. Die Steuerung 22 kann zugleich signalisieren, dass die Ursache für die Abschaltung ein unzulässiger Eingriff ist.

Nach der Sicherheitsauswertung im Schritt S4, alternativ auch parallel dazu oder dieser vorgeschaltet, findet in Schritten S5 und S6 die Kalibrierungsüberprüfung statt. In dem Schritt S5 wird für einen Teilbereich 208a-f zunächst festgestellt, ob er aktuell sichtbar ist und ob eine hinreichende Übereinstimmung mit den in Schritt S3 eingelernten Referenzpositionen besteht. Dabei muss die Sichtbarkeit nicht notwendig gesondert festgestellt werden, solange nur die Referenzpositionen gleich sind oder innerhalb eines vorgegebenen Abweichungsmaßes nicht weiter als erlaubt abweichen. Dieser Schritt S5 wird für alle n Teilbereiche 208a-f wiederholt.

Zu einer abschließenden Bewertung der Kalibrierungsüberprüfung wird in einem Schritt S7 ausgewertet, ob unter Einbeziehung aller auswertbaren Teilbereiche 208a-f die Kalibrierung ausreicht oder nicht. Partielle Abweichungen in einigen Teilbereichen 208a-f, besonders temporäre Abweichungen, sowie kleinere Abweichungen im Rahmen von Justierungstoleranzen können toleriert werden. Lassen sich die Referenzpositionen dauerhaft und in Summe nicht verifizieren, so wird ein Abschaltsignal ausgegeben, wobei die Steuerung 22 auch hier eine Zusatzinformation bereitstellen kann, dass die Ursache eine Fehlkalibrierung und nicht etwa ein unzulässiger Eingriff ist. Dann kann ohne Fehlersuche zielgerichtet mit einer notwendigen Wartung reagiert werden.

Anschließend beginnt der nächste Überwachungszyklus. Die Kalibrierungsüberwachung kann ja nach geforderter Sicherheitskategorie auch nicht in jedem Überwachungszyklus erfolgen, also beispielsweise seltener oder sogar nur beim Einschalten der Kamera 10.

Mit der erfindungsgemäßen Kalibrierungsüberwachung sind für die Wahl der Teilbereiche 208a-f keine zusätzlichen Elemente erforderlich, und es können Entfernungsdaten verwendet werden, die ohnehin für die Sicherheitsfunktion aufgenommen werden. Damit ist das Vorgehen flexibel und unaufwändig implementierbar und durchführbar.

## Patentansprüche

1. 3D-Kamera (10) zur Überwachung eines Raumbereichs (12) mit einer Bildaufnahmeeinrichtung (14, 16) für die Aufnahme eines dreidimensionalen Entfernungsbildes sowie mit einer Steuerung (22), welche dafür ausgebildet ist, die Kalibrierung der Bildaufnahmeeinrichtung (14, 16) anhand von Referenzpositionsdaten zu überprüfen, wobei
die Steuerung (22) dafür ausgebildet ist, die Kalibrierung zu überprüfen, indem mindestens ein Teilbereich (208a-f) des Entfernungsbilds unabhängig von Kontrasteigenschaften der Objekte (204a-b, 206) in dem Raumbereich (12) auswählbar ist, Entfernungsdaten in dem Teilbereich (208a-f) als Referenzpositionsdaten vorab eingelernt und mit im Betrieb erzeugten Entfernungsdaten in dem Teilbereich (208a-f) verglichen werden, **dadurch gekennzeichnet, dass** die 3D-Kamera (10) als Sicherheitskamera ausgebildet ist und einen Sicherheitsausgang (26) aufweist, über den ein Abschaltsignal an eine Gefahrenquelle in dem Raumbereich (12) ausgebbar ist, wenn die Steuerung (22) bei der Überprüfung der Kalibrierung mehr als eine erlaubte Abweichung zwischen Entfernungsdaten und Referenzpositionsdaten oder durch Auswertung des Entfernungsbildes einen unzulässigen Eingriff in dem Raumbereich (12) detektiert.

2. 3D-Kamera (10) nach Anspruch 1,
die eine Kamera (10) nach dem Stereoskopieprinzip ist, deren Bildaufnahmeeinrichtung (14, 16) mindestens zwei pixelaufgelöste Bildsensoren (14a, 14b) sowie eine Stereoskopieauswertungseinheit (22) aufweist, welche dafür ausgebildet ist, Bilddaten der Bildsensoren (14a, 14b) zu dem dreidimensionalen Entfernungsbild zu verrechnen, und wobei eine Beleuchtungseinheit (100) vorgesehen ist, welche dafür ausgebildet ist, dem Raumbereich (12) ein kontrastiertes Beleuchtungsmuster (102) aufzuprägen.

3. 3D-Kamera (10) nach einem der vorhergehenden Ansprüche,
wobei die Steuerung (22) dafür ausgebildet ist, Teilbereiche (208a-f) automatisch auszuwählen.

4. 3D-Kamera (10) nach einem der vorhergehenden Ansprüche,
wobei die Steuerung (22) dafür ausgebildet ist, mindestens drei Teilbereiche (208a-f) auszuwählen.

5. 3D-Kamera (10) nach einem der vorhergehenden Ansprüche,
wobei die Steuerung (22) dafür ausgebildet ist, für die Überprüfung der Kalibrierung mehrere Referenzpositionsdaten aus einem Teilbereich (208a-f) einzulernen und zu vergleichen.

6. 3D-Kamera (10) nach einem der vorhergehenden Ansprüche,
wobei die Steuerung (22) dafür ausgebildet ist, bei der Überprüfung der Kalibrierung temporäre Unterschiede zwischen Entfernungsdaten und Referenzpositionsdaten in den Teilbereichen (208a-f) zu tolerieren und erst dann ein Abschaltsignal zu erzeugen, wenn weniger als eine vorgegebene Anzahl von Teilbereichen (208a-f) länger als eine Mindestzeit nicht auswertbar sind.

7. 3D-Kamera (10) nach einem der vorhergehenden Ansprüche,
wobei die Steuerung (22) dafür ausgebildet ist, der Überprüfung der Kalibrierung zu verschiedenen Zeiten unterschiedliche Teilbereiche (208a-f) zugrunde zu legen.

8. Verfahren zur Überwachung eines Raumbereichs (12) mit einer 3D-Kamera (10), bei dem eine Bildaufnahmeeinrichtung (14, 16) ein dreidimensionales Entfernungsbild aufnimmt und die Kalibrierung der Bildaufnahmeeinrichtung (14, 16) anhand von Referenzpositionsdaten überprüft wird, wobei
die Kalibrierung überprüft wird, indem mindestens ein Teilbereich (208a-f) des Entfernungsbilds unabhängig von Kontrasteigenschaften von Objekten (204a-b, 206) in dem Raumbereich (12) ausgewählt wird, und im Betrieb erzeugte Entfernungsdaten in dem Teilbereich (208a-f) mit als Referenzpositionsdaten vorab eingelernten Entfernungsdaten in dem Teilbereich (208a-f) verglichen werden, **dadurch gekennzeichnet, dass** ein Abschaltsignal an eine Gefahrenquelle in dem Raumbereich (12) ausgegeben wird, wenn die Steuerung (22) bei der Überprüfung der Kalibrierung mehr als eine erlaubte Abweichung zwischen Entfernungsdaten und Referenzpositionsdaten oder durch Auswertung des Entfernungsbildes einen unzulässigen Eingriff in dem Raumbereich (12) detektiert.

9. Verfahren nach Anspruch 8,
wobei die Bildaufnahmeeinrichtung (14, 16) das dreidimensionale Entfernungsbild stereoskopisch aufnimmt, indem Merkmale in Bilddaten mindestens zweier pixelaufgelöster Bildsensoren (14a, 14b) miteinander identifiziert und deren Entfernung anhand einer Disparitätsschätzung berechnet wird, und wobei dem Raumbereich (12) mittels einer Beleuchtungseinheit (100) ein kontrastiertes Beleuchtungsmuster (102) aufgeprägt wird.

10. Verfahren nach Anspruch 8 oder 9,
wobei Teilbereiche (208a-f) automatisch ausgewählt werden, insbesondere mindestens drei Teilbereiche (208a-f).

11. Verfahren nach einem der Ansprüche 8 bis 10,
wobei mehrere Referenzpositionsdaten aus einem Teilbereich (208a-f) eingelernt werden, um die Kalibrierung anhand von Entfernungsprofilen innerhalb eines Teilbereichs (208a-f) zu prüfen.

12. Verfahren nach einem der Ansprüche 8 bis 11,
wobei bei der Überprüfung der Kalibrierung temporäre Unterschiede zwischen Entfernungsdaten und Referenzpositionsdaten in den Teilbereichen (208a-f) toleriert werden und erst dann ein Abschaltsignal erzeugt wird, wenn weniger als eine vorgegebene Anzahl von Teilbereichen (208a-f) länger als eine Mindestzeit nicht auswertbar sind.

## Claims

1. A 3D camera (10) for monitoring a spatial region (12) having an image taking device (14, 16) for the taking of a three-dimensional distance image as well as having a control (22) which is configured to check the calibration of the image taking device (14, 16) with reference to reference position data, wherein the control (22) is configured to check the calibration in that at least one part region (208a-f) of the distance image can be selected independently of contrast properties of the objects (204a-b, 206) in the spatial region (12), in that distance data in the part region (208a-f) are taught in advance as reference position data and in that they are compared with distance data in the part region (208a-f) produced in operation, **characterised in that** the 3D camera (10) is configured as a safety camera and has a safety output (26) via which a switch-off signal can be output to a danger source in the spatial region (12) when the control (22) detects more than one permitted deviation between the distance data and the reference position data on the check of the calibration or detects an unauthorised intrusion in the spatial region (12) by evaluation of the distance image.

2. A 3D camera (10) in accordance with claim 1,
which is a camera (10) in accordance with the stereoscopic principle whose image taking device (14, 16) has at least two pixel-resolved imaged sensors (14a, 14b) as well as a stereoscopic evaluation unit (22) which is configured to calculate the three-dimensional distance image from the image data of the image sensors (14a, 14b) and wherein an illumination unit (100) is provided which is configured to impose a contrasted illumination pattern (102) on the spatial region (12).

3. A 3D camera (10) in accordance with any one of the preceding claims,
wherein the control (22) is configured to select part regions (208a-f) automatically.

4. A 3D camera (10) in accordance with any one of the preceding claims,
wherein the control (22) is configured to select at least three part regions (208a-f).

5. A 3D camera (10) in accordance with any one of the preceding claims,
wherein the control (22) is configured to teach and compare a plurality of reference position data from a part region (208a-f) for a check of the calibration.

6. A 3D camera (10) in accordance with any one of the preceding claims,
wherein the control (22) is configured to tolerate temporary differences between distance data and reference position data in the part regions (208a-f) in the check of the calibration and only to generate a switch-off signal when fewer than a preset number of part regions (208a-f) cannot be evaluated for longer than a minimum time.

7. A 3D camera (10) in accordance with any one of the preceding claims,
wherein the control (22) is configured to use different part regions (208a-f) as the basis of the check of the calibration at different times.

8. A method for monitoring a spatial region (12) using a 3D camera (10), wherein an image taking device (14, 16) takes a three-dimensional distance image and the calibration of the image taking device (14, 16) is checked with reference to reference position data, wherein the calibration is checked in that at least one part region (208a-f) of the distance image is selected independently of contrast properties of objects (204a-b, 206) in the spatial region (12), and in that distance data produced in operation in the part region (208a-f) are compared with distance data taught in advance as reference position data in the part region (208a-f), **characterised in that** a switch-off signal is output to a danger source in the spatial region (12) when the control (22) detects more than one permitted deviation between distance data and reference position data on the check of the calibration or detects an unauthorised intrusion in the spatial region (12) by evaluation of the distance image.

9. A method in accordance with claim 8,
wherein the image taking device (14, 16) takes the three-dimensional distance image stereoscopically in that features in the image data of at least two pixel-resolved image sensors (14a, 14b) are identified with one another and their distance is calculated with reference to a disparity estimate, and wherein a contrasted illumination pattern (102) is imposed on the spatial region (12) by means of an illumination unit (100).

10. A method in accordance with claim 8 or claim 9,
wherein part regions (208a-f) are selected automatically, in particular at least three part regions (208a-f).

11. A method in accordance with any one of the claims 8 to 10, wherein a plurality of reference position data from a part region (208a-f) are taught to check the calibration with reference to distance profiles within a part region (208a-f).

12. A method in accordance with any one of the claims 8 to 11, wherein temporary differences between distance data and reference position data in the part regions (208a-f) are tolerated in the check of the calibration and a switch-off signal is only generated when fewer than a preset number of part regions (208a-f) cannot be evaluated for longer than a minimum time.

## Revendications

1. Caméra à trois dimensions (10) pour la surveillance d'une région dans l'espace (12) avec un système de prise d'images (14, 16) pour prendre une image d'éloignement tridimensionnelle, et avec une commande (22) qui est réalisée pour vérifier le calibrage du système de prise d'images (14, 16) à l'aide de données de position de référence, dans laquelle la commande (22) est réalisée pour vérifier le calibrage en choisissant au moins une région partielle (208a-f) de l'image d'éloignement indépendamment des propriétés de contraste des objets (204a-b, 206) dans la région dans l'espace (12), et pour comparer des données d'éloignement préalablement apprises dans la région partielle (208a-f) à titre de données de position de référence avec des données d'éloignement engendrées en service dans la région partielle (208a-f), **caractérisée en ce que**
la caméra à trois dimensions (10) est réalisée sous forme de caméra de sécurité et comprend une sortie de sécurité (26) via laquelle un signal de coupure peut être fourni à une source de danger dans la région dans l'espace (12) quand la commande (22), lors de la vérification du calibrage, détecte plus d'un écart permis entre les données d'éloignement et les données de position de référence, ou bien, par évaluation de l'image d'éloignement, elle détecte une intervention inadmissible dans la région dans l'espace (12).

2. Caméra à trois dimensions (10) selon la revendication 1,
qui est une caméra (10) selon le principe stéréoscopique, dont le système de prise d'images (14, 16) comprend au moins deux capteurs d'images (14a, 14b) à résolution en pixels, ainsi qu'une unité d'évaluation stéréoscopique (22), laquelle est réalisée pour convertir des données d'images des capteurs d'images (14a, 14b) pour donner l'image d'éloignement tridimensionnelle, et dans laquelle il est prévu une unité d'éclairage (100) qui est réalisée pour imposer à la région dans l'espace (12) un motif d'éclairage (102) fortement contrasté.

3. Caméra à trois dimensions (10) selon l'une des revendications précédentes,
dans laquelle la commande (22) est réalisée pour sélectionner des régions partielles (208a-f) automatiquement.

4. Caméra à trois dimensions (10) selon l'une des revendications précédentes,
dans laquelle la commande (22) est réalisée pour sélectionner au moins trois régions partielles (208a-f).

5. Caméra à trois dimensions (10) selon l'une des revendications précédentes,
dans laquelle la commande (22) est réalisée, pour la vérification du calibrage, pour apprendre plusieurs données de position de référence depuis une région partielle (208a-f) et pour les comparer.

6. Caméra à trois dimensions selon l'une des revendications précédentes,
dans laquelle la commande (22) est réalisée, lors de la vérification du calibrage, pour tolérer des différences temporaires entre les données d'éloignement et les données de position de référence dans les régions partielles (208a-f), et pour générer un signal de coupure uniquement si moins d'un nombre prédéterminé de régions partielles (208a-f) ne peuvent pas être évaluées pendant plus longtemps qu'un temps minimum.

7. Caméra à trois dimensions (10) selon l'une des revendications précédentes,
dans laquelle la commande (22) est réalisée pour baser la vérification du calibrage sur des régions partielles différentes (208a-f) à des moments différents.

8. Procédé pour la surveillance d'une région dans l'espace (12) avec une caméra à trois dimensions (10), dans lequel un système de prise d'images (14, 16) prend une image d'éloignement tridimensionnelle, et le calibrage du système de prise d'images (14, 16) est vérifié à l'aide de données de position de référence, dans lequel le calibrage est vérifié en sélectionnant au moins une région partielle (208a-f) de l'image d'éloignement indépendamment des propriétés de contraste des objets (204a-b, 206) dans la région dans l'espace (12) et en comparant des données d'éloignement engendrées en fonctionnement dans la région partielle (208a-f) avec des données d'éloignement préalablement apprises à titre de données de position de référence dans la région partielle (208a-f),
**caractérisé en ce que**
un signal de coupure est fourni à une source de danger dans la région dans l'espace (12) quand la commande (22), lors de la vérification du calibrage, détecte plus d'un écart permis entre les données et d'éloignement et les données de position de référence ou bien, par évaluation de l'image d'éloignement, elle détecte une intervention inadmissible dans la région dans l'espace (12).

9. Procédé selon la revendication 8,
dans lequel le système de prise d'images (14, 16) prend l'image d'éloignement tridimensionnelle de manière stéréoscopique, en identifiant des caractéristiques dans des données d'images d'au moins deux capteurs d'images (14a, 14b) à résolution en pixels, et calcule leur éloignement au moyen d'une évaluation de disparités, et dans lequel un motif d'éclairage contrasté (102) est imposé dans la région dans l'espace (12) au moyen d'une unité d'éclairage (100).

10. Procédé selon la revendication 8 ou 9,
dans lequel des régions partielles (208a-f) sont automatiquement sélectionnées, en particulier au moins trois régions partielles (208a-f).

11. Procédé selon l'une des revendications 8 à 10,
dans lequel plusieurs données de position de référence dans une région partielle (208a-f) sont apprises, afin de vérifier le calibrage à l'aide de profils d'éloignement à l'intérieur d'une région partielle (208a-f).

12. Procédé selon l'une des revendications 8 à 11,
dans lequel lors de la vérification du calibrage, on tolère des différences temporaires entre des données d'éloignement et des données de position de référence dans les régions partielles (208a-f) et on engendre un signal de coupure uniquement quand moins d'un nombre prédéterminé de régions partielles (208a-f) ne sont pas exploitables pendant plus longtemps qu'un temps minimum.
